# EUROPEAN PATENT APPLICATION

(11) **EP 2 034 310 A1**
(43) Date of publication of application: **11.03.2009**
(21) Application number: 07253567.7
(22) Date of filing: 08.09.2007
(51) Int. Cl.: G01N 33/487, G01N 21/86, G01N 33/52, G01N 33/53, G06K 19/07, G06T 7/00

(54) **Image detection method for diagnostic plates**

(71) Applicant: Kaiwood Technology Co. Ltd., Tainan Hsien (TW)
(72) Inventor: Wu, Tzu-Chaing c/o 5F, 12 Lane 31, Sec 1, Hsin-Chu 741 Tainan Hsien (TW); Lin, Chein-Der c/o 5F, 12, Lane 31 Sec. 1, Hsin-Chu 741 Tainan Hsien (TW)
(74) Representative: Gee, Steven William

(57) **Abstract**

The present invention relates to an image detection method for diagnostic plates, which detects the changes of signal lines in multiple assay regions at the same time, and promotes the detection efficiency remarkably. The diagnostic plates in the present invention may comprise Radio frequency identification (RFID) tags, and comprise at least one assay region, and at least one signal line within the assay region. This image detection method for diagnostic plates according to the present invention comprises: reading the parameters from the RFID tags of the diagnostic plates directly, or reading the alternative RFID tags provided with an RFID reader, or downloading the parameters from external files of computer; detecting the changes of the images whether reaches the stable state; analyzing and measuring the color of signal lines and the background in the image of the diagnostic plates after the images are stabilized; calculating the color intensity difference between the images of the signal line and the corresponding background; and determining the result of the signal lines in the assay region based on the difference in intensity.

## Description

### BACKGROUND OF THE INVENTION

### 1. Field of the Invention

The present invention relates to an image detection method, in particular to an image detection method for diagnostic plates, which detects the changes of signal lines in multiple assay regions at the same time, and promotes the detection efficiency remarkably.

### 2. The Prior Arts

Biochemical examination has become one of the routine clinical tests. The generally known chromatography diagnosis belongs to the biochemical tests, which is an immunoassay makes the use of the binding between antigens and antibodies, and the result is read by naked eyes. Medical physicians evaluated the physiological condition or the drug addict condition of the patients according to these results. The present method for liquid chromatography depends on the presence of a signal line in single color. The operator has to be very careful on the sites for detection since signal lines are not at the same level with each other due to manufacturing and assembly error.

In addition, the results of the generally known chromatography diagnosis are usually determined with the naked eye and judged by the operator with the necessary expertise. The errors occur easily especially when the signal line with single color is faint and vague. The results are then varied due to different judgment.

It will be even troublesome if the operator is facing the same color system with large samples and multiple detection items. The naked eye detection is time-consuming, labor-intensive and not accurate.

In addition, the operator has to record the detection results into different items. A signal line in single color sometimes represents negative result, while sometimes represents positive result in different tests. The results might be mixed up when many items are tested at the same time, and caused wrong records for the tests.

### SUMMARY OF THE INVENTION

The primary objective of the present invention is to provide an image detection method for diagnostic plates, especially to the image detection method for diagnostic plates with multiple test items in an automatic analysis system.

Another objective of the present invention is to provide an image detection method for diagnostic plates, which depends on reading the Radio frequency identification (RFID) tags of the diagnostic plates, or the alternative RFID tags provided with an RFID reader, or external files of computers. The corresponding detection parameters are set to save the analytic time and to prevent the data entry error made by human input.

Yet another objective of the present invention is to provide an image detection method for diagnostic plates, which locates the signal line in the diagnostic plates automatically, and shows consistency in judging negative/positive thresholds to further increase the detection accuracy and analytic efficiency of the automatic system.

In order to accomplish the above mentioned objectives, the diagnostic plates in the image detection method for diagnostic plates of the present invention comprises RFID tags, or can be read from alternative tags provided with an RFID reader, or downloads the parameters from external files of computer. The diagnostic plates comprise at least one assay region, and at least one signal line within the assay region. This method according to the present invention thus comprises: reading the parameters from the RFID tags of the diagnostic plates directly, or reading the alternative RFID tags provided with an RFID reader, or downloading the parameters from the external files; detecting the changes of the images to check the stability; analyzing and measuring the color of signal lines and the background in the image of the diagnostic plates after the images are stabilized; calculating the color intensity difference between the signal line image and the corresponding background; determining the result of the signal lines in the assay region based on the difference in intensity.

The advantages of the method in the invention are locating the precise sites of the assay regions automatically, locating the signal lines in the diagnostic plates automatically, showing consistency in judging negative/positive thresholds, saving the analytic time and preventing the data entry error made by artificial input, further to increase the detection accuracy and analytic efficiency of the automatic system.

The present invention is further explained in the following embodiment illustration and examples. Those examples below should not, however, be considered to limit the scope of the invention, it is contemplated that modifications will readily occur to those skilled in the art, which modifications will be within the spirit of the invention and the scope of the appended claims.

### BRIEF DESCRIPTION OF THE DRAWINGS

The related drawings in connection with the detailed description of the present invention to be made later are described briefly as follows, in which:

FIG. 1 is a diagnostic plate diagram for the image detection method according to a preferred embodiment of the present invention.

FIG. 2 is a flow chart showing the main steps of the image detection method for the diagnostic plate in the embodiment of the present invention.

FIG. 3 is a flow chart showing the steps for stability determination of image changes of the image detection method for the diagnostic plate in the embodiment of the present invention.

FIG. 4 is a flow chart showing the steps for analysis and calculation of the signal lines according to the image detection method for the diagnostic plate in the embodiment of the present invention.

FIG. 5 is a flow chart showing the steps for determining the test items of each assay region to be positive or negative according to the image detection method for the diagnostic plate in the embodiment of the present invention.

### DETAILED DESCRIPTION OF THE PREFERRED EMBODIMENT

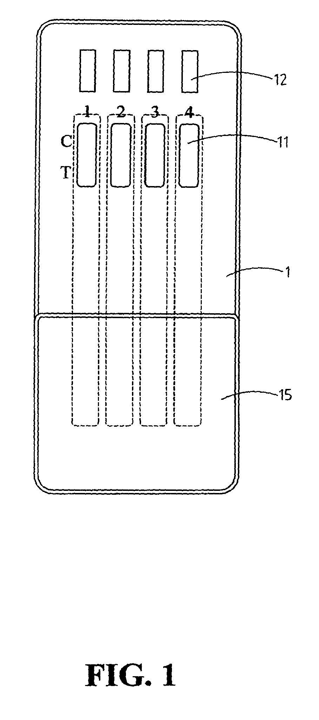

Referring to FIG. 1, a flow chart shows the preferred embodiment of image detection method for diagnostic plates in the present invention. In this preferred embodiment, the body of the diagnostic plate (1) comprises 4 assay regions (11), in correspondence to 4 test items (12) respectively, two signal lines (C and T) set in the assay regions (11) in the strips (represented by dot lines), and RFID tags (in the back of the diagnostic plate, not shown in the figure, not necessary to be attached to the diagnostic plate). The pattern of the diagnostic plate is shown by way of example but not limitation. The test items (12) include, but are not limited to, the physiological changes/disease screening, such as pregnancy, renal diseases; or medicines/drugs screening, such as benzodiazepines (BZD), marijuana, amphetamine, opium and the like. The operator takes out the lid (15) of the diagnostic plate (1), places the four test strips into the samples such as urine sample, let them immersed for several minutes, covers the lid (15) to prevent the leakage, then performs the image detection method for diagnostic plates of the present invention.

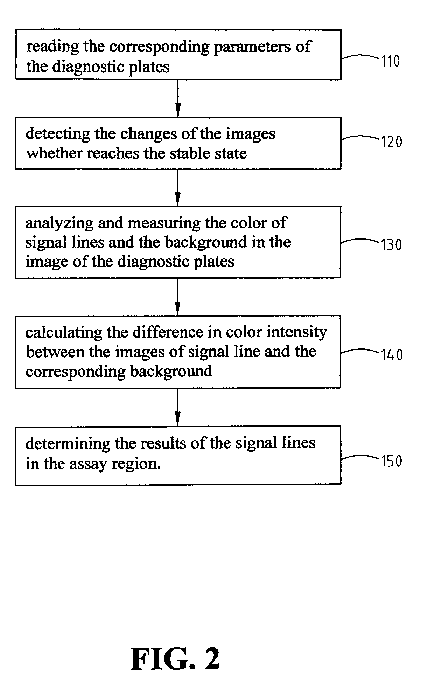

Subsequently referring to FIG. 2, a flow chart shows the main steps of the present invention. The method of the invention is carried out in a computer system, which connects to an RFID reader and an imaging capturing apparatus. Step 110 of the invention is to read the parameters from the RFID tags of the diagnostic plates, which used an RFID reader to read the RFID tags of the diagnostic plates (1) or in other positions, or downloaded the parameters from the external files to let the computer system read the RFID tag directly or set up the corresponding parameters inside the file. The corresponding parameters include, but are not limited to, the number of assay regions, the test items, the size of the diagnostic plate, the size of assay regions, the correction curves for the test items, the diagnostic negative/positive thresholds.

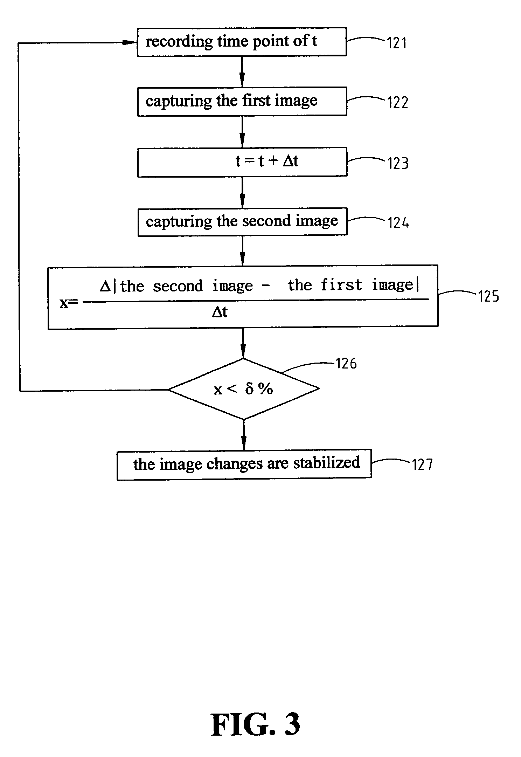

Step 120 of FIG. 2 is to detect the image changes whether reaches the stable state. The stability can be further determined through the steps of 121 to 127 shown in FIG. 3. Firstly, using an image capturing apparatus, such as a CCD camera or Web camera, to take the first image of the diagnostic plate at the time point of t, after a certain time (Δt), and take the second image of the diagnostic plate at the time point of t+Δt during the steps 121 to 124. The image of the diagnostic plate is regarded stable if the image difference (such as the standard deviation) between the first image and the second image relative to the time Δt is smaller than a threshold value during the steps 125 to 126. The Δt for the embodiment is around 0.2 sec, the threshold value δ% is 0%~2%, preferably 0%~1%. That method of the present invention captures several images of the assay regions (11) automatically at the time intervals of every Δt. And the image difference at the time point of t and t+Δt is calculated respectively. The image is regarded stable if the image difference is smaller than the threshold value as shown in step 127.

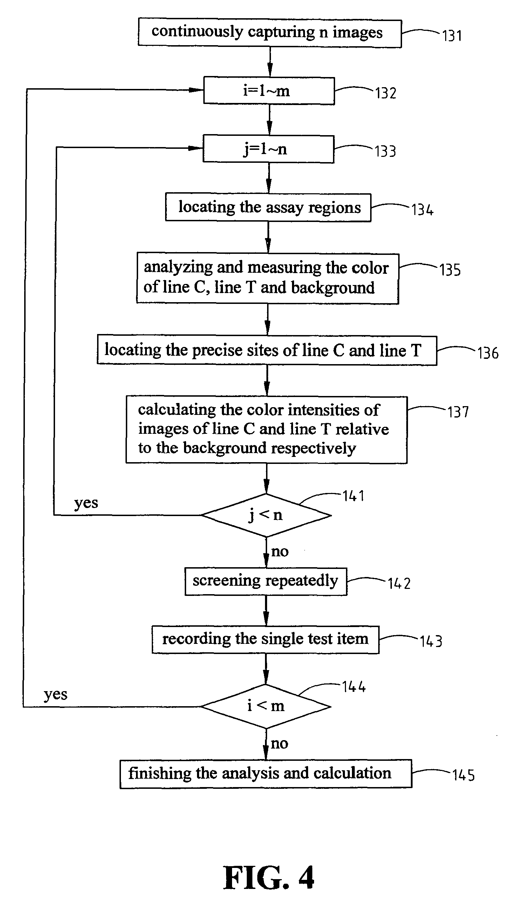

Step 130 of FIG. 2 is to analyze and measure the color of signal lines and the background in the image of the diagnostic plates, and step 140 is to calculate the difference in color intensity between the signal line image and the corresponding background. Both steps of 130 and 140 can be carried out through the flow chart shown in FIG. 4. The method of the present invention is based on repeatedly image-capturing operations, separately analyzing and measuring each assay regions or test items to reach the final judgment. Firstly, images are captured for n times when each image change reaches the stable state in steps of 131 to 133, in which i represent the indicator for m test items, and j represents the indicator for n images.

The sites of assay regions (11) will be located automatically in steps of 134 to 136 for the frame of assay regions (11) as automatic location to further correct the manufacturing errors of the diagnostic plates such as configuration errors for the strips. The precise sites of signal lines are also located automatically, such as the sites for line C and line T, in which line C represents the control line while line T represents the reaction line. Line C shows the standards for quality and concentration of the test items. Subsequently, the color intensities of line C, line T and the background are analyzed to search the precise regions for signal lines in the diagnostic plates. The width of each line is properly defined to automatically locate line C and line T.

The color intensities of line C, line T, and the background of line C and line T inside assay region (11) are calculated in step 137. The differences in color intensity of images of line C and line T relative to the corresponding background are calculated respectively. Among them, the intensity difference between the images of line C and the background is used as a standard to determine the validity of the test items. That is, line C is regarded as present and obvious when the difference in color intensity between the images of line C and the corresponding background is larger than a threshold value. The response and result of test item is regarded as successful and valid. However, the line C is regarded as not present when the difference in color intensity between the images of line C and the corresponding background is smaller than the threshold value. The result is regarded as failed and invalid. This assay has to be performed again. The threshold value is 7, preferably 5 based on grey levels (or pixel intensity values) at the range of 0-225.

The serial images captured in step 131 are integrated and the individual test item is statistics calculated for each assay region in loop of steps from 133 to 141. In step 142, the reported values are obtained by repeatedly screening (such as standard deviation) for each test item. The first difference in color intensity between images of the line C and the corresponding background of the assay region, and the second difference in color intensity between the images of the line T and the corresponding background of the assay region are determined. And the ratio of the second difference in color intensity to the first difference in color intensity is used as the reported values. Among them, the reported values are not limited to the intensity difference or ratio. The reported value of this test item is recorded in step 143. The calculation and analysis of each test item is checked in step 144, the unfinished item will be redo until all the test items are done. All the calculation and analysis of the test items are finished and obtained in step 145.

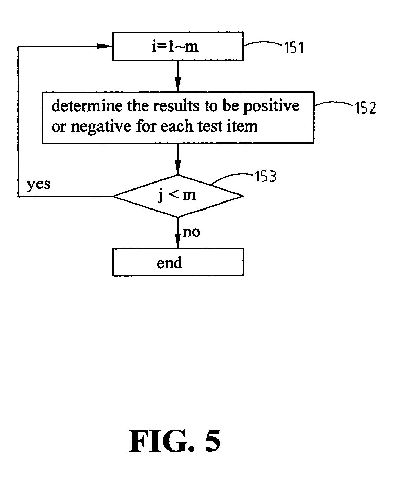

Lastly, step 150 of FIG. 2 is to determine the results of the signal lines in the assay region, which can be further performed through steps of 151 to 153 shown in FIG. 5 to determine the results to be positive or negative for each test item. Each of the reported values of signal lines in each assay region, such as reported values of line C and line T, are compared to the negative/positive threshold values of each test items respectively during the steps 151 to 153. The positive or negative result for each test item is then determined. In the embodiment of the present invention, the test item is determined to be positive if the difference in color intensity between the image of the reaction line (line T) and the background is higher than the threshold value when the test item belongs to the category of physiological changes/disease screening such as pregnancy or renal disease and the like. While the test item is determined to be positive if the difference in color intensity between the image of the reaction line (line T) and the background is lower than the threshold value when the test item belongs to the category of medicines/drugs screening, such as benzodiazepines (BZD), marijuana, amphetamine, opium and the like. However, the test item will be regarded as failed and invalid and the assay has to be repeated if line C is not present, no matter line T is present or not.

The signal line is the reaction line in another embodiment of the present invention. The test item in the corresponding assay region is determined to be positive or negative, and is depended on the difference in color intensity between the image of the reaction line and the corresponding background.

## Claims

1. An image detection method for diagnostic plates, and the diagnostic plates comprise at least one assay region, and at least one signal line in the assay region, the method comprising the steps of:
reading the corresponding parameters of the diagnostic plates;
detecting the changes of the images whether reaches the stable state;
analyzing and measuring the color of signal lines and the background in the image of the diagnostic plates after the image change is stable;
calculating the difference in color intensity between the images of signal line and the corresponding background; and
determining the results of the signal lines in the assay region based on the intensity difference.

2. The image detection method for diagnostic plates as claimed in claim 1, wherein the corresponding parameters of the diagnostic plates comprise the number of assay regions, the test items, the size of the diagnostic plate, the size of assay regions, the correction curves for the test items, the diagnostic negative/positive thresholds.

3. The image detection method for diagnostic plates as claimed in claim 1, wherein the corresponding parameters of the diagnostic plates are read directly from the RFID tags of the diagnostic plates, or the RFID tags provided with an RFID reader or external files.

4. The image detection method for diagnostic plates as claimed in claim 1, wherein the image is regarded stable if the image difference between the images of the two diagnostic plates is smaller than a threshold value.

5. The image detection method for diagnostic plates as claimed in claim 1, further comprising automatic location of assay regions in the images of diagnostic plates.

6. The image detection method for diagnostic plates as claimed in claim 1, further comprising automatic location of signal lines in the images of diagnostic plates.

7. The image detection method for diagnostic plates as claimed in claim 1, wherein the signal line is a control line, the difference in color intensity between the images of the control line and the corresponding background is used as a standard to determine the validity of the test items.

8. The image detection method for diagnostic plates as claimed in claim 7, wherein the test item is determined to be valid if the difference in color intensity between the image of the control line and the corresponding background is higher than a threshold value.

9. The image detection method for diagnostic plates as claimed in claim 8, wherein the test item is determined to be invalid if the difference in color intensity between the images of the control line and the corresponding background is lower than the threshold value.

10. The image detection method for diagnostic plates as claimed in claim 1, wherein the signal line is a reaction line, the difference in color intensity between the images of the reaction line and the corresponding background is used to determine if the result of the test items corresponding to the assay region is positive or negative.

11. The image detection method for diagnostic plates as claimed in claim 10, wherein the test item is determined to be positive if the difference in color intensity between the images of the reaction line and the corresponding background is higher than a threshold value, and when the test item belongs to the category of disease screening.

12. The image detection method for diagnostic plates as claimed in claim 10, wherein the test item is determined to be positive if the difference in color intensity between the images of the reaction line and the corresponding background is lower than the threshold value, and when the test item belongs to the category of drug screening.

13. The image detection method for diagnostic plates as claimed in claim 1, comprising at least one control line and at least one reaction line in the assay region.

14. The image detection method for diagnostic plates as claimed in claim 13, further comprising calculating the first difference in color intensity between the images of the control line and the corresponding background of the assay region, and calculating the second difference in color intensity between the image of the reaction line and the corresponding background of the assay region.

15. The image detection method for diagnostic plates as claimed in claim 14, further comprising calculating the ratio of the second difference in color intensity to the first difference in color intensity, and determining if the result of the test items corresponding to the assay regions is negative or positive.

16. The image detection method for diagnostic plates as claimed in claim 1, further comprising capturing serial images of the diagnostic plates, and analyzing the color of signal lines and the background in each image of the diagnostic plates respectively after the image change is stable.

17. The image detection method for diagnostic plates as claimed in claim 16, further comprising statistics calculating the test items corresponding to the assay regions based on the difference in color intensity between the images of the signal line and the corresponding background for each image.

18. The image detection method for diagnostic plates as claimed in claim 17, further comprising determining the result of each signal line in the assay regions according to reported values based on the statistics calculation for each test item.

19. An image detection method for diagnostic plates, and the diagnostic plates comprise at least one assay region, and at least one signal line within the assay region, comprising the steps of:
reading the corresponding parameters of the diagnostic plates;
determining if the image changes of the diagnostic plates is lower than a threshold value;
analyzing and measuring the color of signal lines and the background in the image of the diagnostic plates if the image change is lower than the threshold value;
calculating the difference in color intensity between the images of signal line and the corresponding background; and
determining the result of the signal lines in the assay region based on the intensity difference.

20. The image detection method for diagnostic plates as claimed in claim 19, wherein the corresponding parameters of the diagnostic plates comprise the number of assay regions, the test items, the size of the diagnostic plate, the size of assay regions, the correction curves for the test items, the diagnostic negative/positive thresholds.

21. The image detection method for diagnostic plates as claimed in claim 19, wherein the corresponding parameters of the diagnostic plates are read directly from the RFID tags of the diagnostic plates, or the RFID tags are read from an RFID reader or external files.

22. The image detection method for diagnostic plates as claimed in claim 19, wherein the image is regarded stable if the image difference between the images of the two diagnostic plates is smaller than a threshold value.

23. The image detection method for diagnostic plates as claimed in claim 19, further comprising automatic location of assay regions in the images of diagnostic plates.

24. The image detection method for diagnostic plates as claimed in claim 19, further comprising automatic location of signal lines in the images of diagnostic plates.

25. The image detection method for diagnostic plates as claimed in claim 19, wherein the signal line is a control line, the difference in color intensity between the images of the control line and the corresponding background is used as a standard to determine the validity of the test items.

26. The image detection method for diagnostic plates as claimed in claim 25, wherein the test item is determined to be valid if the difference in color intensity between the images of the control line and the corresponding background is higher than a threshold value.

27. The image detection method for diagnostic plates as claimed in claim 26, wherein the test item is determined to be invalid if the difference in color intensity between the images of the control line and the corresponding background is lower than the threshold value.

28. The image detection method for diagnostic plates as claimed in claim 19, wherein the signal line is a reaction line, the difference in color intensity between the images of the reaction line and the corresponding background is used to determine if the result of the test items corresponding to the assay region is positive or negative.

29. The image detection method for diagnostic plates as claimed in claim 28, wherein the test item is determined to be positive if the difference in color intensity between the images of the reaction line and the corresponding background is higher than a threshold value, and when the test item belongs to the category of disease screening.

30. The image detection method for diagnostic plates as claimed in claim 28, wherein the test item is determined to be positive if the difference in color intensity between the images of the reaction line and the corresponding background is lower than the threshold value, and when the test item belongs to the category of drug screening.

31. The image detection method for diagnostic plates as claimed in claim 19, comprising at least one control line and at least one reaction line in the assay region.

32. The image detection method for diagnostic plates as claimed in claim 31, further comprising calculating the first difference in color intensity between the images of the control line and the corresponding background of the assay region, and calculating the second difference in color intensity between the images of the reaction line and the corresponding background of the assay region.

33. The image detection method for diagnostic plates as claimed in claim 32, further comprising calculating the ratio of the second difference in color intensity to the first difference in color intensity, and determining if the result of the test items corresponding to the assay regions is negative or positive.

34. The image detection method for diagnostic plates as claimed in claim 19, further comprising capturing serial images of the diagnostic plates, and analyzing the color of signal lines and the background in each image of the diagnostic plates respectively after the image change is lower than a threshold value.

35. The image detection method for diagnostic plates as claimed in claim 34, further comprising statistics calculating the test items corresponding to the assay regions based on the difference in color intensity between the image of signal line and the corresponding background for each image.

36. The image detection method for diagnostic plates as claimed in claim 35, further comprising determining the result of each signal line in the assay regions according to reported values based on the statistics calculation for each test item.
